(19) Europäisches Patentamt

European Patent Office

Office européen des brevets

(11) Veröffentlichungsnummer: **0 333 188**
**A1**

(12) **EUROPÄISCHE PATENTANMELDUNG**

(21) Anmeldenummer: **89104723.5**

(22) Anmeldetag: **16.03.89**

(51) Int. Cl.⁴: **B60R 11/02**

(30) Priorität: **17.03.88 DE 3808940**

(43) Veröffentlichungstag der Anmeldung:
**20.09.89 Patentblatt 89/38**

(84) Benannte Vertragsstaaten:
**AT ES FR GB IT NL SE**

(71) Anmelder: **Schaad, Reinhold**
**Riedstrasse 15**
**D-6361 Reichelsheim 5(DE)**

(72) Erfinder: **Schaad, Reinhold**
**Riedstrasse 15**
**D-6361 Reichelsheim 5(DE)**

(54) **Diebstahlwarn- und -sicherungs-einrichtung für Einschubgeräte, insbesondere Autoradios.**

㋕ Die Diebstahlwarn und -sicherungseinrichtung wirkt in der Weise, daß ein Einschubgerät (2) (Autoradio, o.ä.) nach Einschub, mittels einer Drahtverbindung (4) mit Zugkontakt (5), an einem Karrosserieteil (9) (vorzugsweise vom Motorraum aus) befestigt wird.

Beim Diebstahlversuch wird vom Zugkontakt über den Signalgeber Alarm ausgelöst und die dann gespannte Drahtverbindung verhindert ein Entwenden.

EP 0 333 188 A1

FIG. 1

Xerox Copy Centre

Die Erfindung betrifft eine Diebstahlwarn und -sicherheitseinrichtung für Einschubgeräte, insbesondere Autoradios.

Der Einbruchdiebstahl von hochwertigen Geräten, insbesondere Radiogeräten aus Kraftfahrzeugen, stellt ein großes Problem dar. Dem Schutz der Geräte kommt eine immer größere Bedeutung zu. Bisher sind nur Warneinrichtungen bekannt die zwar Alarm auslösen, aber keinen ausreichenden Schutz gegen entwenden bieten.

Der Erfindung liegt die Aufgabe zugrunde, vorstehende Nachteile zu beseitigen und Einschubgeräte gegen Entwenden zu schützen.

Erreicht wird dies, daß beim unbefugten herausziehen des Gerätes die bestehende Drahtverbindung zum Fahrzeug ein herausnehmen verhindert und der Zugkontakt über das Zeitschaltwerk den Signalgeber auslöst.

Rechtmäßiges Entfernen des Gerätes erfolgt dadurch, daß vor dem herausziehen des Gerätes die Fahrzeugverbindung gelöst wird. Dadurch hat der Zugkontakt keinen Widerstand mehr und wird somit nicht ausgelöst. Ein Herausziehen des Gerätes ist möglich und die Drahtverbindung an der Geräterückwand kann gelöst werden.

Durch die Erfindung ist eine Diebstahlwarn und -sicherungseinrichtung geschaffen, die beim Diebstahlversuch unmittelbar anspricht und eine Warnung, vorzugsweise einen deutlich hörbaren Warnton abgibt. Durch Zusatzeinrichtung wird - wie gesetzlich vorgeschrieben - die Warndauer zeitlich begrenzt. Zusätzlich setzt die Drahtverbindung mit dem Fahrzeug, dem Dieb einen mechanischen Widerstand entgegen, der nur mit entsprechendem Zeitaufwand bei - durch Signalanlage bedingtem - großen Risiko überwunden werden kann. Somit kann von einer großen Abschreckungswirkung ausgegangen werden.

Die Erfindung ist in der beigefügten Zeichnung beispielsweise veranschaulicht. Es zeigen:

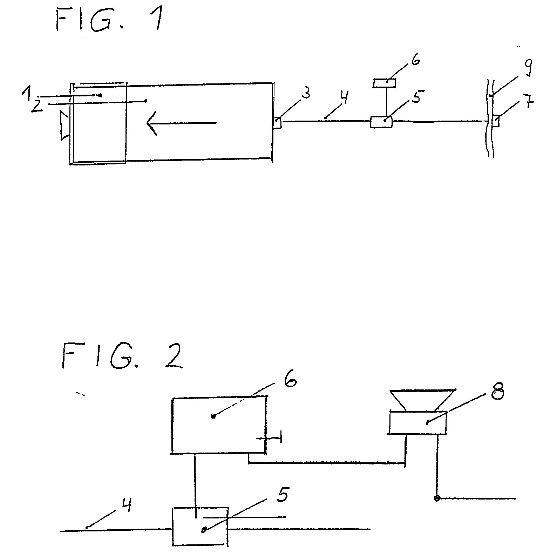

Figur 1 die kompletten Aggregate

Figur 2 den Schaltvorgang zur Alarmauslösung

Die erfindungsgemäße Einrichtung arbeitet wie folgt:

Der Befestigungsdraht (4) mit einem elektr. Zugkontakt (5) und Zeitschaltwerk (6) wird mit der Geräterückwand verbunden, das Gerät wird in die Halterung (1) im Fahrzeug eingeschoben, der Befestigungsdraht wird gestrafft und mit Fahrzeug (7) verbunden.

Wird nun das Gerät unbefugt herausgezogen, löst der Zugkontakt (5) durch schließen des Stromkreises Alarm aus, der durch den Signalgeber (8) verbreitet wird, wobei das Zeitschaltwerk (6) die Alarmdauer begrenzt. Gleichzeitig verhindert der Befestigungsdraht (4), der mit dem Fahrzeug noch verbunden ist, ein komplettes herausziehen und entwenden des Gerätes.

## Ansprüche

1. Diebstahlwarn und -sicherungseinrichtung für Einschubgeräte, insbesondere Autoradios, dadurch gekennzeichnet, daß das Gehäuse (2) mit einem Befestigungsdraht (4) über einen Zugkontakt (5) und Signalgeber (8) mit dem Fahrzeug (9) lösbar verbunden (7) wird.

2. Diebstahlwarn und -sicherungseinrichtung nach Anspruch 1, dadurch gekennzeichnet, daß zwischen Zugkontakt (5) und Signalgeber (8) ein Zeitschaltwerk (6) eingeschaltet ist.

3. Diebstahlwarn und -sicherungseinrichtung nach Anspruch 1 und 2, dadurch gekennzeichnet, daß der Signalgeber (8) von akustischem Gerät, beispielsweise Fahrzeughupe gebildet ist

4. Diebstahlwarn und -sicherungseinrichtung nach Anspruch 1 bis 3, dadurch gekennzeichnet, daß der Befestigungsdraht (4) aus Kunststoff besteht.

Neu eingereicht / Newly fil
Nouvellement déposé

FIG. 1

FIG. 2

Europäisches
Patentamt

# EUROPÄISCHER RECHERCHENBERICHT

Nummer der Anmeldung

EP 89 10 4723

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 431 941  (CHEMIN)<br>* Seite 1, Zeilen 1-10; Ansprüche 1,2 *<br>--- | 1 | B 60 R   11/02 |
| Y | US-A-3 643 250  (SANDER)<br>* Insgesamt *<br>--- | 1 | |
| A | DE-U-8 614 988  (BLASKOWITZ)<br>* Figuren; Seite 4, Zeilen 1-20 *<br>--- | 1 | |
| A | DE-A-3 513 114  (WARM)<br>* Ansprüche 1-3; Figuren *<br>--- | 1-3 | |
| A | US-A-4 211 995  (SMITH)<br>* Figuren 1,2; Zusammenfassung; Spalte 2, Zeilen 36-46; Spalte 4, Zeilen 28-33 *<br>----- | 1,3 | |

|  |
|---|
| **RECHERCHIERTE SACHGEBIETE (Int. Cl.4)**<br><br>B 60 R<br>G 08 B |

Der vorliegende Recherchenbericht wurde für alle Patentansprüche erstellt

| Recherchenort | Abschlußdatum der Recherche | Prüfer |
|---|---|---|
| DEN HAAG | 22-06-1989 | DUBOIS B.F.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)